Europäisches Patentamt

(19) European Patent Office

Office européen des brevets

(11) Publication number: **0 010 832**
**B1**

(12) **EUROPEAN PATENT SPECIFICATION**

(45) Date of publication of patent specification: **16.12.81**

(51) Int. Cl.³: **G 01 N 1/22, G 01 N 33/00**

(21) Application number: **79301443.2**

(22) Date of filing: **20.07.79**

(54) Method and apparatus for collecting and storing environmental gases.

(30) Priority: **31.10.78 US 956312**

(43) Date of publication of application:
**14.05.80 Bulletin 80/10**

(45) Publication of the grant of the European patent:
**16.12.81 Bulletin 81/50**

(84) Designated Contracting States:
**DE FR GB**

(56) References cited:
**DE - B2 - 1 925 883**
**US - A - 3 295 359**
**US - A - 3 866 474**
**US - A - 3 938 391**

(73) Proprietor: **AIR PRODUCTS AND CHEMICALS, INC.**
**P.O. Box 538**
**Allentown, Pennsylvania 18105 (US)**

(72) Inventor: **Hansen, Robert Gunnard**
**3831 Mariana Way**
**Santa Barbara, California (US)**

(74) Representative: **Lucas, Brian Ronald**
**c/o Air Products Limited Coombe House St. George's Square**
**New Malden, Surrey (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Method and apparatus for collecting and storing environmental gases

This invention relates to a method and apparatus for collecting and storing a sample of an environmental gas such as air.

Over the past several decades, man has become more conscious of his environment and particularly, the air he breathes. As industry progresses so new sources of air pollution occur causing harmful materials to be discharged into the atmosphere so that it has become more and more important to monitor the earth's atmosphere. This is particularly true in areas where nuclear explosive devices have been tested, nuclear power plants operate and in other highly concentrated industrial environments.

The most common method of sampling an environmental gas such as air has been to utilize a conventional compressor to force the air under pressure into a sample container. One of the problems associated with this method is the possiblity of contaminating the sample due to the use of oils and other lubricants in the compressor.

Air samples have also been gathered by utilizing a liquefied gas to condense the air inside a pre-cooled container. The air sample is then taken to a laboratory where the container is allowed to warm to ambient temperature thus revaporizing the liquid to the gaseous state. The gaseous sample is then passed through the required analyzer. This method has the disadvantage that a supply of liquefied gas must be available. Furthermore the liquefied gas evaporates and enters the gas environment in the area where the sample is being taken thereby causing the sample to be contaminated.

Another disadvantage of existing apparatus is that the sample is collected by simply opening and closing a valve and is thus unsuitable for obtaining an average sample over, for example, several hours.

The present invention, at least in its preferred form, overcomes these prior art problems and provides a method and apparatus for collecting a contamination-free sample by utilizing a closed cycle cryogenic refrigerator to condense and store the sample to be subsequently analyzed and means to collect the sample at a constant rate.

According to one aspect of the present invention there is provided a method of collecting and storing a sample of an environmental gas, characterized in that it comprises the steps of:

providing a sample bottle associated with a metering orifice for admitting said environmental gas;

using a closed cycle cryogenic regrigerator to cool said sample bottle below the temperature at which said environmental gas condenses to create a partial vacuum in said sample bottle thus drawing said environmental gas into said bottle;

maintaining the temperature of said sample bottle at such a level as to inhibit evaporation or freezing of said condensed gas; and

continuing collection of said sample at a constant rate until the desired amount of sample is obtained.

Preferably said environmental gas is air, in which case the sample bottle is preferably maintained at a temperature above 65K and below 73K.

Advantageously, collection is continued until the sample bottle is full.

The present invention also provides an apparatus for collecting and storing a sample of environmental gas characterized in that it comprises in combination

a sample bottle having means for admitting and discharging a quantity of environmental gas;

means to meter the quantity of environmental gas admitted to said sample bottle at a constant rate; and

means connectable to a closed cycle cryogenic refrigerator to cool said sample bottle below the temperature at which said environmental gas condenses; whereby when said sample bottle is cooled below said condensation temperature a partial vacuum is created in said sample bottle thus permitting environmental gas to be drawn into said bottle and condensed.

Preferably the sample bottle is constructed from a lightweight structural metal.

Advantageously, the apparatus comprises separate inlet and outlet conduits, and said metering means comprises a gas metering orifice at or adjacent the inlet of said inlet conduit.

Preferably, said apparatus includes a cryogenic refrigerator.

Preferably, said sample bottle and a portion of said cooling means surrounded by insulation. Such insulation is preferably a lightweight synthetic foam.

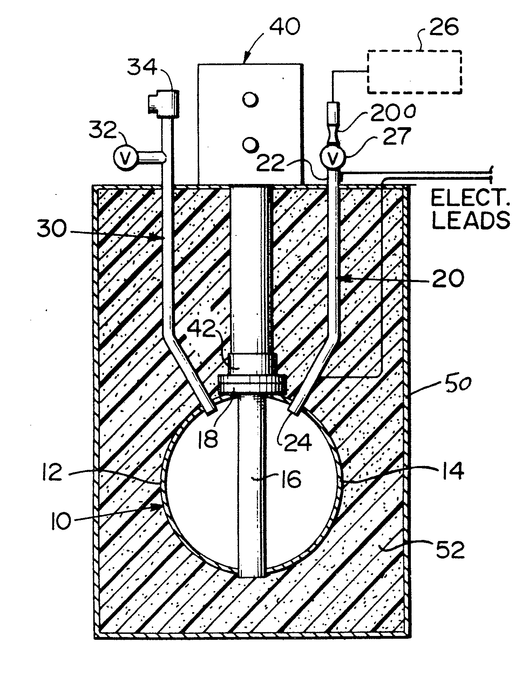

The single figure of the drawing is a schematic representation of one embodiment of an apparatus in accordance with the present invention.

Referring to the drawing, numeral 10 indicates a sample bottle in the form of a sphere. The sample bottle 10 is fabricated in two hemispherical portions 12 and 14 and is supported by a post 16. The post 16 is fabricated from copper, which is a good heat conductor, and has on one end thereof an adaptor 18 for mating with a refrigerator as will be hereinafter more fully described.

One end 24 of an inlet conduit 20 is welded to the sample bottle 10 whilst the other end 22 is provided with a shut-off valve 27 and a metering orifice 200, the purpose of which will be hereinafter more fully described. Also associated with the inlet is an optional drier 26 for predrying the incoming air. Outlet conduit 30 serves as a means for withdrawing collected sample and as a vent. Conduit 30 is similar to conduit 20, and is welded to the sample bottle 10. At the outlet end of conduit 30, there is a sample withdrawing valve 32 and a pressure relief valve 34.

In order to cool the sample bottle 10, a closed cycle cryogenic refrigerator, 40, (Model DE102 supplied by Air Products and Chemicals Inc., Allentown, Pennsylvania) is utilized. Refrigerator 40 is a single stage displacer-expander type refrigerator operated by a remote compressor and has a cold finger having, at its extremity, a cold shoe 42 which mates with adaptor 18 of post 16 to provide good thermal contact with the sample bottle 10.

As shown in the drawing, the major portions of the sample bottle 10, inlet conduit 20, outlet conduit 30, and the cold finger of the cryogenic refrigerator 40 are placed within a support housing 50 filled with synthetic foam 52 as insulation.

The sample bottle 10 and conduits 20 and 30 are fabricated from stainless steel which is a relatively poor heat conductor.

In order to achieve a lightweight structure, the cryogenic refrigerator disclosed is preferable, however, it is not necessary that the cryogenic refrigerator be of the type utilizing a remote compressor. To do so only minimizes the weight of the overall system.

The metering orifice 200 is installed in the inlet conduit 20 to set the rate at which the sample is drawn into the sample bottle 10.

Thus, the apparatus shown in the drawing consists of a cryogenic refrigerator having a cold end (expander) separate from the compressor which can produce refrigeration at a temperature below 75 degrees Kelvin (K). The sample bottle 10 is sized to contain a specified quantity of the gas being sampled in liquid form.

The apparatus is operated as follows. First, the sample bottle 10 is evacuated and, if necessary, heated to approximately 66°C (150°F) to drive out contaminants. Depending upon the nature of insulation 52, it may have to be removed during the period when the sample bottle 10 is heated. If this is the case, after sample bottle 10 is cooled to ambient temperature, the insulation is replaced around the bottle. The cryogenic refrigerator 40 is then activated, and the system is allowed to cool down. As the system is cooled to below 75K, the inlet shut-off valve 27 is opened causing a sample of the environment (e.g. air) to be drawn into the sample bottle 10 since it is partially evacuated. Sample bottle 10, being at a temperature below 75K, will cause the air sample to condense and thus be stored as liquid within sample bottle 10. At the time the sample is to be analyzed, the system can be allowed to come to ambient temperature by turning off the cryogenic refrigerator 40, withdrawing the sample through valve 32, and putting the sample through an analyzer.

As set out above, the apparatus operates on the principal that below 78.8K air, if this is the gas being sampled, liquefies. The sample bottle 10, cooled to this temperature, creates a partial vacuum in the bottle which permits the sample of ambient air to be drawn into the bottle and condense. The sample so collected is not contaminated since the bottle is clean to start with, and the sample has not passed through a compression device. As is well-known, as long as the pressure in the sample bottle 10 is less than the critical pressure for the orifice, the flow rate of gas through the orifice into the bottle will be constant. The equation for the critical pressure is

$$\frac{Pc}{P} = \left(\frac{k}{k+1}\right)^{\frac{k}{k-1}} \quad (2)$$

Pc— Critical pressure downstream of orifice
P — Ambient pressure at inlet to orifice
k — Ratio of specific heats for the gas

Air has a value of K = 1.4; therefore, the pressure in the sample bottle must be less than 53% of the ambient air pressure for the flow rate to be constant. For sea level conditions, the temperature of the liquid in the sample bottle must be less than about 73K for the vapour pressure to be less than .53 atmospheres absolute.

It is also important to limit the minimum sample bottle temperature so that the sample does not freeze. This is done to avoid the possibility of rupturing the sample bottle when the sample melts after having frozen. For air, a minimum temperature of about 65K is required to avoid freezing the sample. Control of temperature between 65K and 73K may be accomplished by adjusting the amount of insulation to have the heat losses match the refrigeration rate. It may more preferably be done by using an electric heater in combination with a temperature sensor/controller.

In use, as sample bottle 10 becomes full with liquid, and liquid begins to fill the inlet tube 20, the temperature of the surface of the liquid in inlet tube 20 rises to at least 78.8K, thus equalizing the pressure in the inlet tube and thus prevents further sampling since the pressure in the inlet tube would be the same as upstream of the metering orifice:

The apparatus shown in the figure has the following advantages:

(a) The metering orifice 200 ensures that the air can be drawn at a constant rate (assuming the pressure in the bottle is less than 0.5 atmospheres and the temperature is approximately 73K)

(b) Foam insulation 52 is used to minimize the weight and cost.

(c) The entire apparatus can operate unattended in any location where electrical power is available.

(d) The inlet and vent tubes are made of stainless steel to minimize heat leak. Electrical leads can be fastened to the tubes or passed through the tubes to provide heating to eliminate any blockage due to freezing of the gas being sampled.

(e) The sample is not contaminated since it does not pass through a compressor or other apparatus wich could be a source of contamination.

(f) The sample bottle is lightweight and designed for a pressure from vacuum to 1 bar absolute (15 psig). Utilization of a post 16 aids in heat transfer from the refrigerator to the sample bottle 10.

(g) Unattended operation of the apparatus permits sampling in hazardous environments.

In view of the foregoing features, the system can be designed to be lightweight and portable with rapid cooldown, e.g. of the order of 30 minutes. It is possible when the regrigerator is turned off and the sample warms to have it boil off and flow directly into a gas analyzer without the need for intermediate containment and thus avoid further opportunities for contamination. A separate withdrawal/vent line provides an added safety feature. The internal post 16 provides a condensing surface for the sample and helps maintain a uniform temperature and provides internal sturctural support for the sample bottle 10. Lastly, the inclusion of electrical leads can provide a mechanism for removing blockages in the event of a freeze-up in the system.

As stated above, when utilizing the apparatus of the present invention to sample air, as long as the sample container is maintained at a temperature of between 65K and 78.8K, the collected sample will remain liquefied. Until the sample container 10 is filled, there will be a partial vacuum within the sample container 10 thus containing the collection process and the metering orifice 200 will continue to admit the sample at a constant rate in accordance with the orifice setting.

The apparatus can be applied to sampling other gaseous atmospheres as long as the refrigerator is set to operate at temperature ranges that will maintain the sample in liquid form inside the bottle 10.

## Claims

1. A method of collecting and storing a sample of an environmental gas, characterized in that it comprises the steps of:

providing a sample bottle (10) associated with a metering orifice (200) for admitting said environmental gas;

using a closed cycle cryogenic refrigerator (40) to cool said sample bottle (10) below the temperature at which said environmental gas condenses to create a partial vacuum in said sample bottle (10) thus drawing said environmental gas into said sample bottle (10);

maintaining the temperature of said sample bottle (10) at such a level as to inhibit evaporation or freezing of said condensed gas; and

continuing collection of said sample at a constant rate until the desired amount of sample is obtained.

2. A method according to Claim 1, characterized in that said environmental gas is air.

3. A method according to Claim 2, characterized in that said sample bottle (10) is cooled to and maintained at a temperature of less than 73 degrees Kelvin and above 65 degrees Kelvin.

4. A method according to Claim 1, 2 or 3, characterized in that said collection continues until said sample bottle (10) is full.

5. An apparatus for collecting and storing a sample of environmental gas characterized in that it comprises in combination

a sample bottle (10) having means for admitting (20) and discharging (30) a quantity of environmental gas;

means to meter (200) the quantity of environmental gas admitted to said sample bottle (10) at a constant rate; and

means (16, 18) connectable to a closed cycle cryogenic refrigerator (40) to cool said sample bottle (10) below the temperature at which said environmental gas condenses; whereby when said sample bottle (10) is cooled below said condensation temperature a partial vacuum is created in said sample bottle thus permitting environmental gas to be drawn into said bottle and condensed.

6. An apparatus according to Claim 5, characterized in that said sample bottle (10) is constructed from a lightweight structural metal.

7. An apparatus according to Claim 5 or 6, characterized in that it comprises separate inlet (20) and outlet (30) conduits, and said metering means comprises a gas metering orifice (200) at or adjacent the inlet of said inlet conduit (20).

8. An apparatus according to Claim 5, 6 or 7, characterized in that it includes a cryogenic refrigerator (40).

9. An apparatus according to Claim 5, 6, 7 or 8 characterized in that said sample bottle (10) and a portion of said cooling means are surrounded by insulation (52).

10. An apparatus according to Claim 9, wherein said insulation (52) is a lightweight synthetic foam.

## Revendications

1. Procédé pour prélever et stocker un échantillon d'un gaz environnant, caractérisé en ce qu'il comprend les étapes consistant à:

préparer une bouteille à échantillon (10) associée à un orifice doseur (200) pour admettre ledit gaz environnant;

utiliser un réfrigérateur cryogénique à cycle fermé (40) pour refroidir ladite bouteille à échantillon (10) au-dessous de la température à laquelle le gaz environnant se condense pour créer un vide partiel dans ladite bouteille à échantillon (10), aspirant ainsi ledit gaz environnant dans ladite bouteille à échantillon (10);

maintenir la température de ladite bouteille à échantillon (10) à un niveau tel qu'il inhibe l'évaporation ou la congélation dudit gaz condensé; et

poursuivre la collecte dudit échantillon à vitesse constante jusqu'à obtenir la quantité d'échantillon désirée.

2. Procédé selon la revendication 1, caractérisé en ce que ledit gaz environnant est de l'air.

3. Procédé selon la revendication 2, caractérisé en ce que ladite bouteille à échantillon (10) est refroidie et maintenue à une température inférieure à 73 degrés Kelvin et supérieure à 65 degrés Kelvin.

4. Procédé selon la revendication 1, 2 ou 3, caractérisé en ce que ledit prélèvement continue jusqu'à ce que la bouteille à échantillon (10) soit pleine.

5. Appareil pour prélever et stocker un échantillon de gaz environnant, caractérisé en ce qu'il comprend en combinaison

une bouteille à échantillon (10) munie de moyens pour admettre (20) et rejeter (30) une quantité de gaz environnant;

des moyens (200) pour doser la quantité de gaz environnant; dans ladite bouteille à échantillon (10) à vitesse constante; et

des moyens (16, 18) pouvant être reliés à un réfrigérateur cryogénique à cycle fermé (40) pour refroidir ladite bouteille à échantillon (10) au-dessous de la température à laquelle ledit gaz environnant se condense; ce grâce à quoi, lorque ladite bouteille à échantillon (10) est refroidie au-dessus de ladite température de condensation, un vide partiel est créé dans ladite bouteille à échantillon, permettant au gaz environnant d'être aspiré dans ladite bouteille et d'y être condensé.

6. Appareil selon la revendication 5, caractérisé en ce que ladite bouteille à échantillon (10) est constituée en un métal léger.

7. Appareil selon la revendication 5 ou 6, caractérisé en ce qu'il comprend des conduites séparées d'entrée (20) et de sortie (30) et en ce que lesdits moyens de dosage comprennent un orifice doseur de gaz (200) sur ou adjacent à l'entrée du ladite conduite d'entrée (20).

8. Appareil selon la revendication 5, 6 ou 7, caractérisé en ce qu'il comprend un réfrigérateur cryogénique (40).

9. Appareil selon la revendication 5, 6, 7 ou 8, caractérisé en ce que ladite bouteille à échantillon (10) et une partie desdits moyens de refroidissement sont entourés par une isolation (52).

10. Appareil selon la revendication 9, caractérisé en ce que ladite isolation (52) est constituée par une mousse synthétique légère.

**Patentansprüche**

1. Verfahren zum Sammeln und Aufbewahren einer Probe eines Umgebungsgases, dadurch gekennzeichnet, daß es folgende Schritte umfaßt:

es wird ein Probengefäß (10) eingesetzt, dem eine Meßdüse (200) zugeordnet ist, um das Umgebungsgas zuzuführen;

es wird eine Tiefsttemperaturkühleinrichtung (40) mit einem geschlossenen Kreislauf verwendet, um das Probengefäß (10) unter die Temperatur abzukühlen, bei der das Umgebungsgas kondensiert, um ein teilweises Vakuum in dem Probengefäß (10) zu erzeugen, wodurch das Umgebungsgas in das Probengefäß (10) gesaugt wird;

es wird die Temperatur des Probengefäßes (10) auf einem solchen Niveau gehalten, daß ein Verdampfen oder Gefrieren des kondensierten Gases verhindert ist; und

es wird das Sammeln der Probe mit einer konstanten Geschwindigkeit fortgesetzt, bis die gewünschte Probenmenge erhalten worden ist.

2. Verfahren nach Anspruch 1, dadurch gekennzeichnet, daß das Umgebungsgas Luft ist.

3. Verfahren nach Anspruch 2, dadurch gekennzeichnet, daß das Probengefäß (10) auf eine Temperatur von weniger als 73° Kelvin und mehr als 65° Kelvin abgekühlt und auf dieser Temperatur gehalten wird.

4. Verfahren nach Anspruch 1, 2 oder 3, dadurch gekennzeichnet, daß das Sammeln solange fortgesetzt wird, bis das Probengefäß (10) voll ist.

5. Vorrichtung zum Sammeln und Aufbewahren einer Probe eines Umgebungsgases, gekennzeichnet durch folgende Kombination:

eine Probengefäß (10) mit einer Einrichtung zur Zufuhr (20) und Abgabe (30) einer Umgebungsluftmenge;

eine Einrichtung (200) zur Messung der Menge des Umgebungsgases, das dem Probengefäß (10) mit einer konstanten Geschwindigkeit zugeführt wird; und

eine Einrichtung (16, 18), die an eine Tiefsttemperaturkühleinrichtung (40) mit einem geschlossenen Kreislauf angeschlossen ist, um das Probengefäß (10) unter eine Temperatur abzukühlen, bei der das Umgebungsgas kondensiert, so daß, wenn das Probengefäß (10) unter die Kondensationstemperatur abgekühlt wird, ein teilweises Vakuum in dem Probengefäß entsteht, um das Umgebungsgas in das Gefäß zu saugen und zu kondensieren.

6. Vorrichtung nach Anspruch 5, dadurch gekennzeichnet, daß das Probengefäß (10) aus einem Leichtmetall aufgebaut ist.

7. Vorrichtung nach Anspruch 5 oder 6, dadurch gekennzeichnet, daß sie eine separate Einlaß- und Auslaßleitung (20 bzw. 30) aufweist, und die Meßeinrichtung eine Meßdüse (200) an oder nahe dem Einlaß der Einlaßleitung (20) umfaßt.

8. Vorrichtung nach Anspruch 5, 6 oder 7, dadurch gekennzeichnet, daß sie eine Tiefsttemperaturkühleinrichtung (40) aufweist.

9. Vorrichtung nach Anspruch 5, 6, 7 oder 8, dadurch gekennzeichnet, daß das Probengefäß (10) und ein Teil der Kühleinrichtung von einer Isolation (52) umgeben sind.

10. Vorrichtung nach Anspruch 9, dadurch gekennzeichnet, daß die Isolation (52) aus einem leichten Kunststoffschaum besteht.